# EUROPEAN PATENT APPLICATION

(11) **EP 4 803 035 A1**
(43) Date of publication of application: **09.09.2026**
(21) Application number: 26160879.8
(22) Date of filing: 26.02.2026
(51) Int. Cl.: A61C 9/00

(54) **IMPRESSION TRAY AND DENTAL KIT**

(30) Priority: 06.03.2025 NL 2039929
(71) Applicant: Hager & Werken Gmbh & Co. KG, 47269 Duisburg (DE)
(72) Inventor: Van den Bosch, Willem Frederik, 2333 VA Leiden (NL)
(74) Representative: Nederlandsch Octrooibureau

(57) **Abstract**

An impression tray (100) can have a concave tray body (1) and a tab (2). The tray body (1) comprises a buccal wing (3) on a buccal side of the tray body (1) and a lingual wing (4) on a lingual side of the tray body (1). Support members (5, 6) extend from an edge (15) of the buccal wing (3) to a corresponding edge (16) of the lingual wing (4). A penetrable sheet (9) is stretched flat in a space between the buccal wing (3) and the lingual wing (4) and extending along the edge (15) of the buccal wing (3), the edge (16) of the lingual wing (4), and the plurality of support members (5, 6), The height (19) of the lingual wing (4) is at most half the distance (12) between the buccal wing (3) and the lingual wing (4).

## Description

### FIELD OF THE INVENTION

The invention relates to an impression tray with a concave tray body for taking an impression of at least one jaw part, in which at least one implant body with an impression post is situated, it being possible to fill the impression tray with a free-flowing hardenable impression material to produce a mould for a model of the jaw part. The invention further relates to a dental kit.

### BACKGROUND OF THE INVENTION

As is known from e.g. US 8,465,281 B2, when one or more teeth are lost, replacement roots, what are known as implants, are implanted into the jaw. These supports that are anchored in the jaw form the stable base for new, secure teeth. The size and shape of an implant is guided by the individual preconditions of the jaw of the patient being treated. One precondition for tooth implantation is a minimum jaw bone substance.

Since implants are osseo-integrated (anchored to a bone) and, in contrast to natural teeth, do not-ideally-have even the slightest inherent movement, when constructing a plurality of implants an optimally exact three-dimensional reproduction of the position of the individual implants is particularly important.

The replacement produced in a dental laboratory can only be successfully incorporated in the oral cavity without stress if the clinical situation is transferred exactly to a model. While a precise impression is not a sufficient condition it is a necessary one for implantological-prosthetic care.

The aim of any impression is thus the exact dental model. It is used for diagnosis, planning and treatment purposes as well as a work basis for the dental technician and should be an exact copy of the structures that are in the oral cavity.

The part of an implant system that is countersunk into the bone is either called an implant body or simply an implant. Once it has been introduced into the bone the hollow implant body is provided with a cover screw. The gums are then stitched over the implant body. Following a healing phase of several months' duration, the doctor then exposes the implant body again, removes the cover screw and temporarily screws or inserts an impression post in its place.

After a healing period, the impression may be taken over the impression post by means of an impression tray in order to subsequently produce the crown, bridge or prosthesis. The impression post is then replaced for a few days by healing abutments. The definitive new teeth are not usually secured directly to the implant bodies, but to implant superstructures, however. Implant superstructures bridge the thickness of the gums, so the gums cannot be squashed between implant body and prosthesis. The healthy gums attach to these implant superstructures as to a natural tooth. The prosthesis accordingly supported by the implant abutment and implant body is called a superconstruction and is secured by filling screws or other fastening principles to the individual implant bodies.

US 8,465,281 describes a one-piece impression tray made of plastics material. The impression tray has a concave tray body (for taking an impression of at least one jaw part, in which at least one implant body is situated, which body has a receiving aperture into which an impression post may be inserted, it being possible to fill the impression tray with a free-flowing hardenable impression material to produce a mold for a model of the jaw part, which when used reduces the time spent in the dentist's chair, increases the precision of an implant model and finally reduces the material and labor costs in that, at least in one portion, the tray body has a wall which can be penetrated by an impression post inserted into the implant body if the impression tray is placed onto the jaw part.

US 6,468,078 B2 describes an impression tray device for a transfer of a dental implant, the tray device comprising a body having a closed face and a succession of segments removable from the body, each segment having two walls forming an L-shaped profile of the segment, the body having an opening extending in register with each of the walls so that each wall of the segments substantially closes the opening.

US 4,708,654 describes a dental impression tray filled with softened impression material applied over the jaw. The impression tray has a conventional design, including a handle and a through-like depression. The impression tray has an opening provided in the through-like depression over the alveolar ridge. This way the guide pins protrude from the back side of the impression tray when the tray is applied to a jaw.

US 2017/0007376 A1 describes a dental impression acquisition tray that includes: a handle; a dental acquisition frame including a first extending from an end of the handle, a second part opposite the first part, and a middle connection part connecting the first part and the second part to each other; a dental acquisition film disposed in a space inside the dental acquisition frame; and a reinforcing member extending along the dental acquisition frame, inserted in the first part and the second part, and exposed to the outside at the middle connection part, in which a plurality of grooves is formed in the first part and the second part.

WO 03/011167 A2 describes a dental impression tray having a pair of spaced and outwardly flared sidewalls with a layer of material, such as gauze, netting, plastic or the like, or a rigid material, extending perpendicularly between the sidewalls. The sidewalls, furthermore, are dimensioned to extend substantially a one-half arch of a dental occlusion. The layer of material, however, extends outwardly from one end of the sidewalls so that the layer extends substantially a three-quarters of an arch of a dental occlusion. The dental impression tray is easily convertible between a one-half arch and a three-quarters arch of a dental occlusion by selectively removing the outwardly extending portion of the layer material. Additionally, a frame connects the sidewalls together while a notch in the frame enables the sidewalls to deflect upon occlusion and remain in a deflected position

### SUMMARY OF THE INVENTION

It would be advantageous to have an improved impression tray for taking a negative impression of at least one jaw part in a mouth of a patient.

According to an aspect, an impression tray is provided that comprises a tray body, wherein the tray body is fillable with a free-flowing hardenable impression material to produce a mold for a model of the at least one jaw part, wherein the tray body comprises:
a buccal wing on a buccal side of the tray body;
a lingual wing on a lingual side of the tray body at a distance from the buccal wing;
a plurality of support members extending from an edge of the buccal wing to a corresponding edge of the lingual wing;
a penetrable sheet stretched flat in a space between the buccal wing and the lingual wing and extending along the edge of the buccal wing, the edge of the lingual wing, and the plurality of support members;
wherein a height of the lingual wing measured from the penetrable sheet is at most half the distance between the lingual wing and the buccal wing.

The limited height of the lingual wing allows the same impression tray to be used for both upper jaw and lower jaw. Thus, it is not necessary to make separate impression trays for upper and lower jaws. This reduces manufacturing complexity and costs. Moreover, the design with limited height of the lingual wing reduces discomfort. The impression tray can be used more easily in patients with, for example, lingual exostosis. The impression tray may be a dental impression tray.

The lingual wing may be arranged coaxially to the buccal wing. This is a natural configuration for buccal and lingual wings.

The height of the lingual wing may taper towards a posterior end of the impression tray. This further limitation of the height of the lingual wing improves patient comfort. Surprisingly, it does not hamper the quality of the produced mold.

The height of the buccal wing measured from the penetrable sheet may be at most half the distance between the lingual wing and the buccal wing. This further reduces the patient discomfort. It allows the impression tray to be used in more patients, for example in case of exostosis.

The height of the buccal wing may taper towards a posterior end of the impression tray. This further limitation of the height of the buccal wing improves patient comfort. Surprisingly, it does not hamper the quality of the produced mold.

The height of the lingual wing may taper over a distance of at least 10 millimeters, preferably about 10 to 15 millimeters, towards the posterior end, to a height of at most 4 millimeters, preferably 0 millimeter, measured from the penetrable sheet. Alternatively or additionally, the height of the buccal wing may taper over a distance of at least 10 millimeters, preferably about 10 to 15 millimeters, towards the posterior end, to a height of at most 4 millimeters, preferably 0 millimeter, measured from the penetrable sheet. Such a reduction of the height greatly reduces any problems in placement of the tray that may occur in certain patients

For example, at least one of the buccal wing and the lingual wing may comprise at least one slot configured to allow to release excess impression material through the slot, wherein the at least one slot is arranged at a distance from the penetrable sheet of at most 6 millimeters. Despite the small distance to the penetrable sheet, the impression tray provided good molds in the experiments.

The at least one slot may be arranged at a distance from the penetrable sheet that is more than half of the height of the wing comprising the at least one slot. Such a placement of the slot allows the free-flowing hardenable impression material to stay in the tray close to the sheet while avoiding too much pressure in the free-flowing hardenable impression material during the impression process.

The most posterior slot may be, for example, 10 to 15 millimeters from the posterior end of the impression tray. This allows the wings to taper behind the most posterior slot to below the height of the slot.

The impression tray may further comprise a tab. The tab may extend from the edge of the buccal wing on an anterior side of the tray body. The tab makes it easier to handle the impression tray while it is in the mouth. The edge on which the sheet is fitted is most suitable for the tab for reduced disturbance of the lips of the patient.

The penetrable sheet may be, for example, a membrane, a woven fabric, a non-woven fabric or a film. These were found to be suitable materials for the membrane.

The impression tray may be a plastics material injection molded part comprising the penetrable sheet integrally joined thereto and penetrable by the impression post. Alternatively, the penetrable sheet may be joined to the edge of the wings by e.g. welding.

**In** certain embodiments, the height of the lingual wing, measured from the penetrable sheet, may be at most 11 millimeters. Alternatively or additionally, the height of the buccal wing, measured from the penetrable sheet, may be at most 14 millimeters. These limited heights make it easier to handle the impression tray, improves patient comfort. Moreover, with these dimensions the impression tray may be used for both upper jaw and lower jaw.

The length of the tray body measured from an incisal edge to a posterior end may be between 40 and 80 millimeters. This range of sizes is suitable to cover most commonly occurring jaw sizes.

According to another aspect, a dental set is provided. The dental set comprises at least three impression trays in at least three different sizes, wherein a length of the impression tray measured from an incisal edge to a posterior end differs between the at least three different impression trays, the dental set comprising a first impression tray having a length, measured from an incisal edge to a posterior end, of about 60 to 80 millimeters; a second impression tray having a length, measured from an incisal edge to a posterior end, of about 50 to 70 millimeters; and a third impression tray having a length, measured from an incisal edge to a posterior end, of about 40 to 60 millimeters, wherein in each impression tray the wings taper towards the posterior end. This provides a cost effective set that can be used on the great majority of the population.

According to another aspect, a dental set is provided, comprising an impression tray as set forth herein, an impression post, and at least one implant body that is adapted to be situated in the at least one jaw part, said at least one implant body comprising a receiving aperture for insertion of the impression post. This impression post and implant body can be efficiently measured by creating a mold using the impression tray set forth. The impression post can be pressed through the penetrable sheet so that it does not hamper the impression procedure.

The person skilled in the art will understand that the features described above may be combined in any way deemed useful. Moreover, modifications and variations described in respect of the system may likewise be applied to the method and to the computer program product, and modifications and variations described in respect of the method may likewise be applied to the system and to the computer program product.

### BRIEF DESCRIPTION OF THE DRAWINGS

In the following, aspects of the invention will be elucidated by means of examples, with reference to the drawings. The drawings are diagrammatic and may not be drawn to scale. Throughout the drawings, similar items may be marked with the same reference numerals.
Fig. 1 shows a top view of an impression tray.
Fig. 2 shows a perspective top view of the impression tray.
Fig. 3 shows another perspective top view of the impression tray.
Fig. 4 shows a perspective bottom view of the impression tray.
Fig. 5 shows another perspective bottom view of the impression tray.
Fig. 6 shows a perspective bottom view of the impression tray from posterior viewpoint.
Fig. 7A shows a jaw with impression posts.
Fig. 7B illustrates placing an impression tray into the mouth.
Fig. 7C shows a detail of a tray body, pressed towards the teeth.
Fig. 7D shows a tray body with hardened impression material.
Fig. 8 shows a dental set with a plurality of impression trays.
Fig. 9 shows a dental implant with an impression post.

### DETAILED DESCRIPTION OF EMBODIMENTS

Certain exemplary embodiments will be described in greater detail, with reference to the accompanying drawings.

The matters disclosed in the description, such as detailed construction and elements, are provided to assist in a comprehensive understanding of the exemplary embodiments. Accordingly, it is apparent that the exemplary embodiments can be carried out without those specifically defined matters. Also, well-known operations or structures are not described in detail, since they would obscure the description with unnecessary detail.

Although the examples described and shown in the present disclosure are designed for human teeth and jaws, the impression trays disclosed herein can also be adapted and used in veterinary practice. For example, the shape and size can be adapted to the jaw of a horse or a dog.

An impression tray 100 can have a concave tray body 1 and a tab 2. The tray body 1 comprises a buccal wing 3 on a buccal side of the tray body 1 and a lingual wing 4 on a lingual side of the tray body 1. Support members 5, 6 extend from an edge 15 of the buccal wing 3 to a corresponding edge 16 of the lingual wing 4. A penetrable sheet 9 is stretched flat in a space between the buccal wing 3 and the lingual wing 4 and extending along the edge 15 of the buccal wing 3, the edge 16 of the lingual wing 4, and the plurality of support members 5, 6, The height 19 of the lingual wing 4 is at most half the distance 12 between the buccal wing 3 and the lingual wing 4.

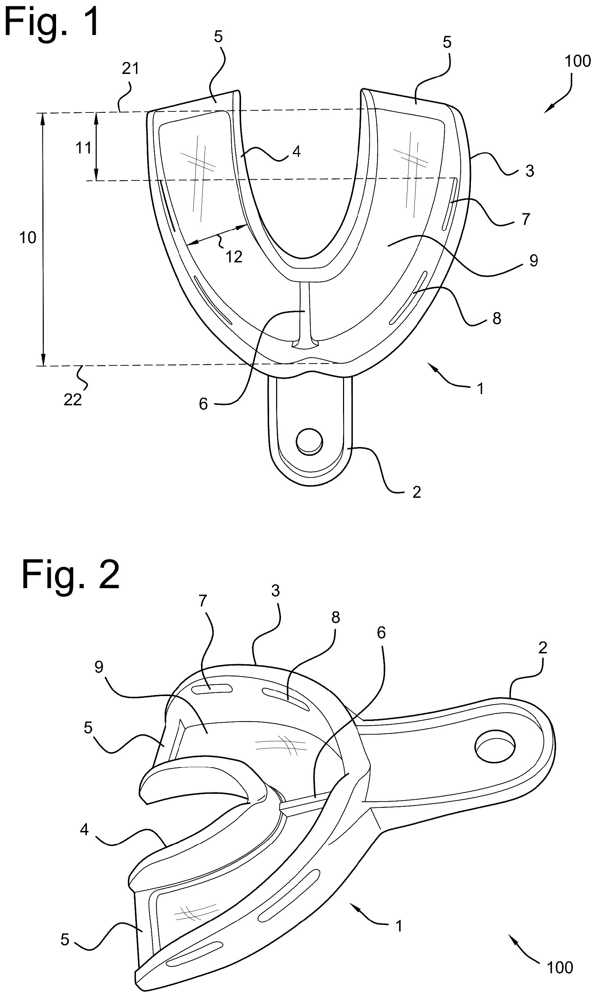

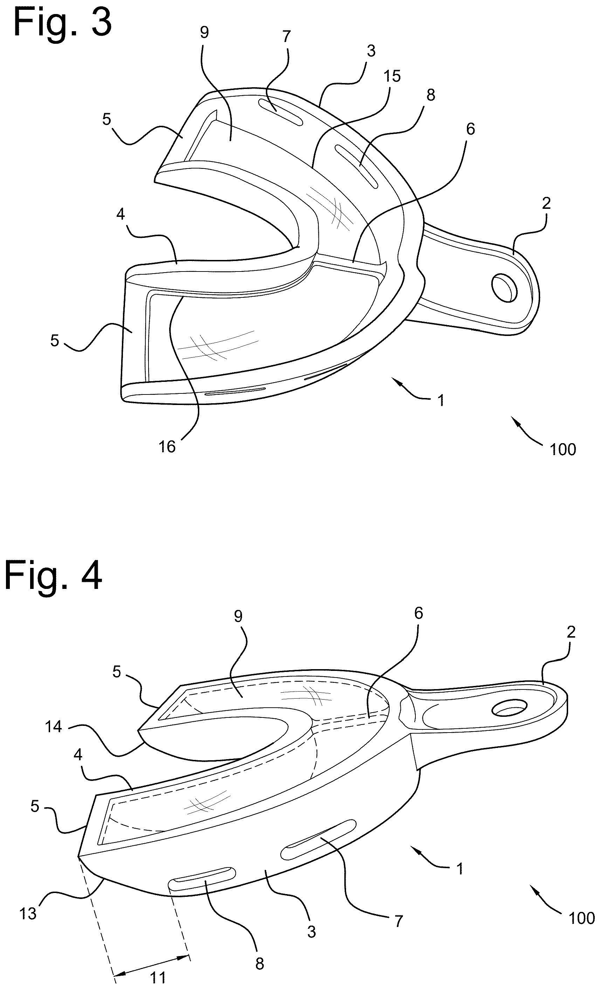

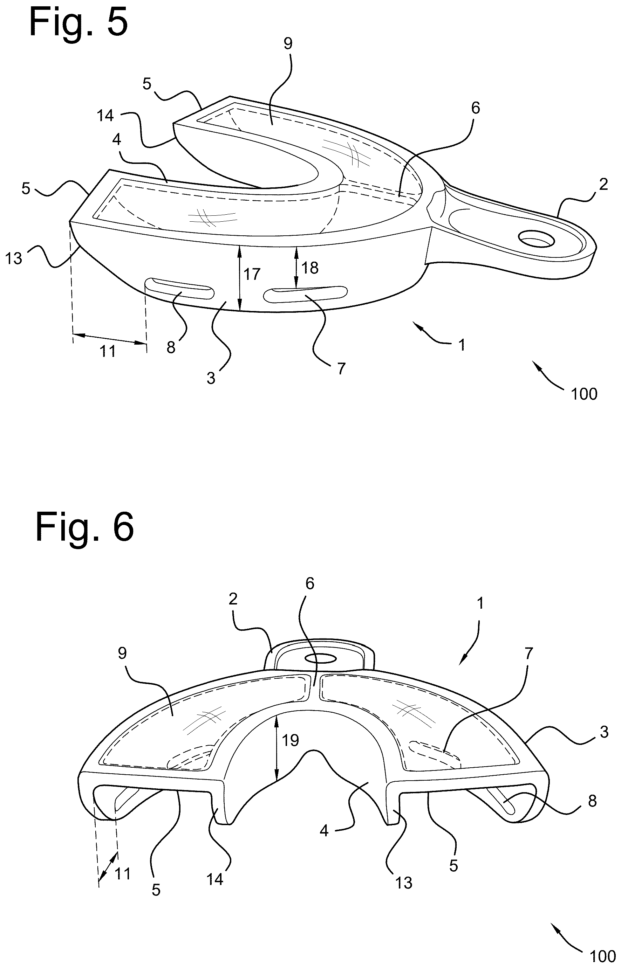

Fig. 1 shows an example of an impression tray 100 in top view. Fig. 2 shows a perspective top view of the impression tray. Fig. 3 shows another perspective top view of the impression tray. Fig. 4 shows a perspective bottom view of the impression tray. Fig. 5 shows another perspective bottom view of the impression tray. Fig. 6 shows a perspective bottom view of the impression tray from posterior viewpoint.

The impression tray 100 has a tray body 101 and a tab 102. The tab 102 is for handling the impression tray.

The tray body 101 is concave and is shaped with a channel that is open on one side and generally follows the course of the teeth of a jaw, so that the teeth of a jaw can be fitted in the tray body, after the channel has been filled with a hardenable impression material. The impression material may be free-flowing and hardens while the teeth are pressed in the impression material, so that the shape of the teeth and any implants is impressed in the impression material when the impression material hardens.

The channel is bounded by a buccal wing 103, a lingual wing 104, and a penetrable sheet 109 that connects an edge of the buccal wing 103 to a corresponding edge of the lingual wing 104. **In** alternative embodiments, these edges may be connected in part by a plastic or other non-penetrable material. The more posterior half is the place where the implants are usually placed, so there a part of the connection material should be penetrable.

The impression tray may be made of plastic and partly covered with a penetrable sheet, such as a transparent foil, through which rigid structures inserted in the implants can be pushed through during the impression. In a dental laboratory, the impressions may typically be cast in plaster and at a later stage supra-structures can be manufactured, which are placed on the implants. For example crowns, bridges and all kinds of prosthetics can be designed and built based on the position of the implant as consolidated in the cast impression.

The impression trays disclosed herein can be used both in the mandible and the maxilla. The penetrable sheet allows superstructures to push therethrough, allowing impression of the location and orientation of the superstructures in the impression material, so that the models manufactured in a laboratory using the impression(s) provide a good representation of the insertion direction of the implant(s).

One to a maximum of 16 implants are usually placed and imprinted per jaw. Jaw implants are placed in the jaw to replace natural elements or for the purpose of strengthening prosthetic devices to be placed later. After implants have been placed in the jaw, they first are allowed to grow firmly into the jaw for a while, before impressions and superstructures are made. The impression trays disclosed herein are specially designed for making impressions of implants. Pins are placed in the implants, which indicate the direction of insertion of the implants in the models made in a laboratory. These pins can be screwed into the implant instead of cover screws. In addition, slots are provided in the implant trays that allow the excess impression mass to flow out of the tray during impression making, so that the pressure of the impression mass in the tray does not become too high during impression making.

Furthermore, the concave impression trays can be designed in such a way that both lower and upper impressions can be made with the same impression tray. To cater for different jaw sizes, differently sized impression trays may be provided. It was found that 3 sizes of impression trays allows sufficient flexibility to support the vast majority of upper and lower jaws in human adults. The outer and inner (buccal and lingual/palatinal) "wings" of the trays are specially adapted to allow universal applicability to lower and/or upper jaws. The impression trays are usually made of plastic but can also be made of any suitable other material, preferably sterilizable. Preferably a rigid or resilient material is used for the wings of the impression tray.

For accuracy, the impression method using these patented trays is the best method when the implants have screwed-in pins. The pins indicate the correct insertion direction in protruding through the penetrable sheet when making the impression. This ensures accuracy. Using these impression trays saves time and money for the dentist/operator and the patient. Moreover, as confirmed by a clinical test performed by Prof. Dr. Dr. José Luis Calvo Guirado D.D.S, PhD, Eu PhD, M.S., it reduces discomfort. According to the outcome of the clinical tests, the improved impression tray can be used in patients with, for example, lingual exostosis. The reduced size of the buccal wings helps to fit the tray in place in certain patients, while still providing suitable impression result. In addition or alternatively, the reduced size of the lingual wing helps to apply the same tray for both upper and lower jaws.

Returning to Fig. 1, best understood in conjunction with alternative views provided by Figs. 2 to 7, an example of an impression tray 100 will be described in the following. The impression tray comprises a concave tray body 1 for taking a negative impression of at least one jaw part in a mouth of a patient, wherein the tray body 1 is fillable with a free-flowing hardenable impression material to produce a mold for a model of the at least one jaw part. The tray body 1 comprises a buccal wing 3 on a buccal side of the tray body 1, and a lingual wing 4 on a lingual side of the tray body 1. The buccal wing 3 and the lingual wing 4 extend from one side of a back of the tray body 1. **In** the example illustrations, the back of the tray body 1 is formed by support members 5, 6 and penetrable sheet 9. However, in alternative embodiments the support members 9 can be bigger, covering more of the surface of the back of the implant body 1 while leaving a part of the surface to the penetrable sheet. There is a distance 12 between the buccal wing 3 and the lingual wing 4. The support members 5, 6 extend from an edge 15 of the buccal wing 3 to a corresponding edge 16 of the lingual wing 4, so that both wings 3, 4 are on the same side of the support members 5, 6. The penetrable sheet 9 is stretched flat in a space between the buccal wing 3 and the lingual wing 4 and extending along the edge 15 of the buccal wing 3, the edge 16 of the lingual wing 4, and the plurality of support members 5, 6. The penetrable sheet 9 is penetrable by an impression post 20 that is fixed to the dental implant 23 in a part of a jaw 24.

Notably, the height 19 of the lingual wing 4 measured from the penetrable sheet 9 may be limited to at most half the distance 12 between the buccal wing 3 and the lingual wing 4. Alternatively or additionally, this height is at most 11 millimeters. Moreover, the height 17 of the buccal wing 3, as measured from the penetrable sheet 9, may be limited to at most half the distance 12 between the buccal wing 3 and the lingual wing 4. Alternatively or additionally, this height is at most 14 millimeters.

The height 19 of the lingual wing 4 may taper towards a posterior end 21 of the impression tray 100. Thus, the height of the lingual wing 4 may gradually decline towards the posterior end 21 of the impression tray 100. Similarly, the height 17 of the buccal wing 3 may taper towards the posterior end 21 of the impression tray 100. Thus, the height of the buccal wing 3 may gradually decline towards the posterior end 21 of the impression tray 100. For example, this tapering of the lingual wing 4 and/or buccal wing 3 may extend along the last 10 or 15 millimeters towards the posterior end 21 of the impression tray. For a larger sized impression tray, the tapering section may be longer than for a smaller sized impression tray. The smallest height near the posterior end of the impression tray may be at most 4 millimeters, or even 0 millimeters.

As illustrated, the buccal wing 3 may comprise at least one slot 7, 8, which is a through hole. The slot 7, 8 preferably is a longitudinal through slit extending in anterior-posterior direction, in parallel to the penetrable sheet. The slot 7, 8 is large enough to allow to release excess impression material through the slot 7, 8. Preferably, the slots 7, 8 are arranged at a distance 18 away from the penetrable sheet 9 of at most 6 millimeters (measured to the closest edge of the slot 7, 8). The at least one 7, 9 may be arranged preferably at least 4 millimeters, more preferably at least 5 millimeters away from the penetrable sheet 9. For example, the at least one slot 7, 8 may be arranged at a distance 18 from the penetrable sheet 9 that is more than half of the height 17, 19 of the wing 3, 4 comprising the at least one slot 7, 8.

The most posterior slot 7 may be 10 to 15 millimeters away from the posterior end 21 of the impression tray 100. Behind the most posterior slot 7 the height of the wing 3, 4 may taper to a height less than the height of the slot 7.

The tab 2 may extend from the edge 15 of the buccal wing 3 on an anterior side 22 of the tray body 1. The penetrable sheet 9 may be a membrane, a woven fabric, a non-woven fabric or a film. The impression tray 100 may be a plastics material injection molded part comprising the penetrable sheet 9 integrally joined thereto and penetrable by an impression post 20. However, other constructions are also possible.

The length of the tray body, measured from a posterior end 21 to an anterior end 22 of the tray body, may be between 40 and 80 millimeters. The anterior end 22 may be close to the place where the incisal edge of the teeth is placed during the use of the impression tray. The buccal wing 3 at the anterior end 22 would be anterior to this incisal edge when the teeth are in the tray body.

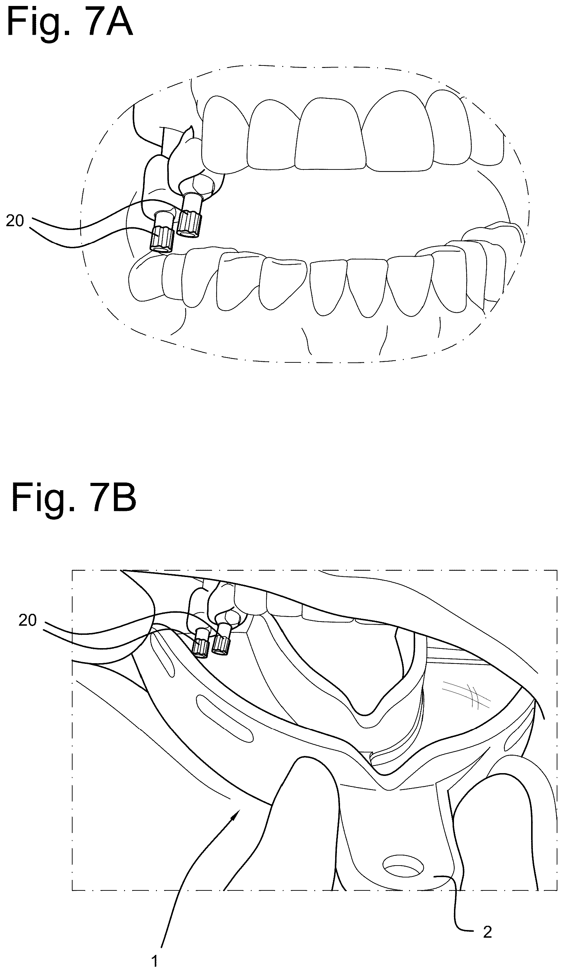

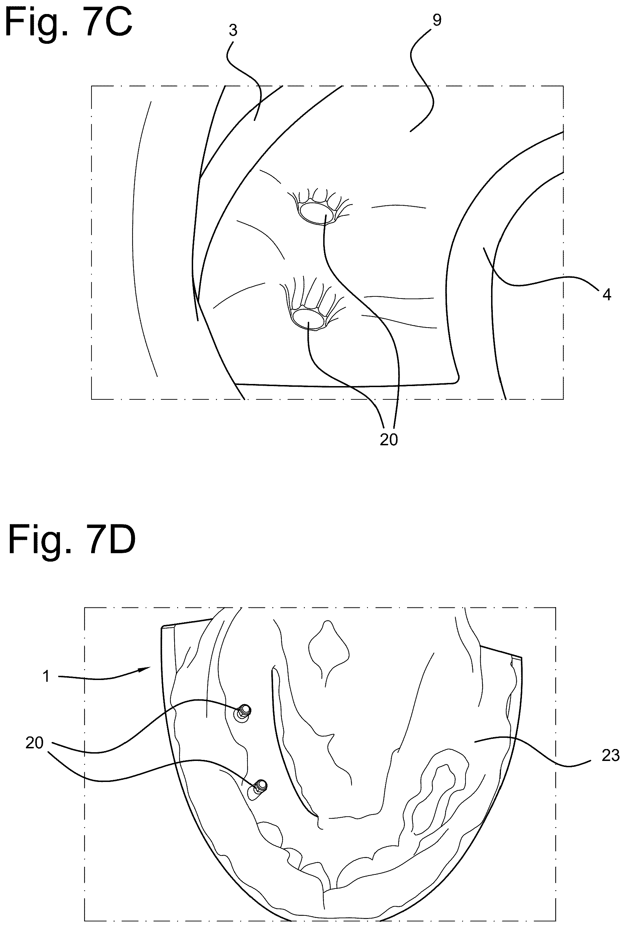

Fig. 7A-7D shows a process of using the impression tray 100 to make an impression of a jaw with optional teeth and one or more impression posts 20. Fig. 7A shows an exemplary jaw with teeth and two impression posts 20. Fig. 7B illustrates placing the impression tray 100 into the mouth. Fig. 7C shows a detail of the tray body 1 in the mouth, pressed towards the teeth. The two impression posts 20 are puncturing through the penetrable sheet 9. Fig. 7D shows the tray body 1 of the impression tray 100, with the hardened impression material 23.

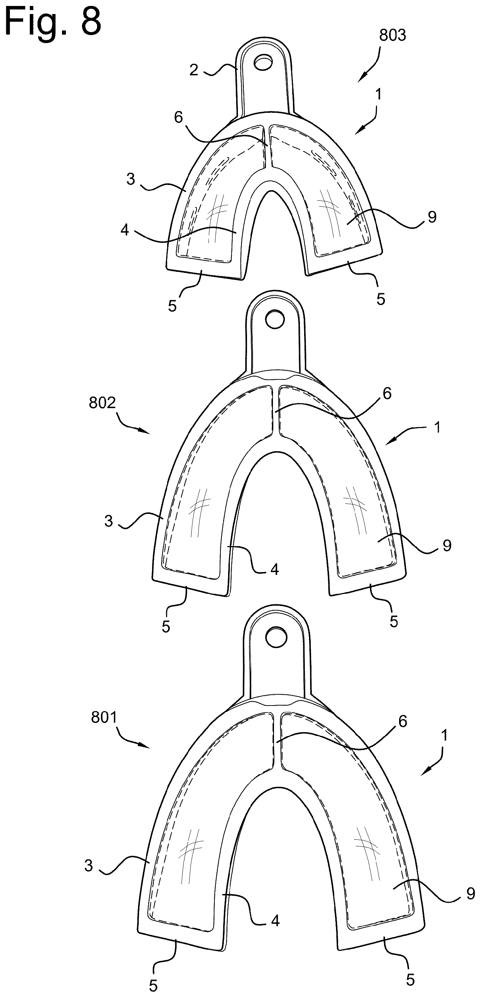

Fig. 8 shows a dental set comprising three differently sized impression trays. For example, a dental set can contain a plurality of different sizes, wherein a length 10 of the tray body 1 of the respective impression tray 100, measured from the posterior end 21 to the anterior end 22, differs between the different impression trays. Preferably, a dental set comprises at least three impression trays: a first impression tray 801 with a large size, a second impression tray 802 with a medium size, and a third impression tray 803 with a small size. Thus, the tray body 1 of the first impression tray 801 is larger than the tray body of the second impression tray 802 and the tray body 1 of the second impression tray 802 is larger than the tray body 1 of the third impression tray 803. The first impression tray 801 may have an tray body 1 having a length 10 of about 60 to 80 millimeters; the second impression tray 802 may have an tray body 1 having a length 10 of about 50 to 70 millimeters; and the third impression tray 803 may have an tray body 1 having a length, measured from an incisal edge to a posterior end, of about 40 to 60 millimeters. Preferably, the first impression tray 801 has an tray body 1 with a length 10 of about 65 to 75 millimeters; the second impression tray 802 with an tray body 1 having a length 10 of about 50 to 70 millimeters; and a third impression tray with an tray body 1 having a length of about 40 to 60 millimeters. Yet more preferably, the first impression tray 801 has an tray body 1 with a length 10 of about 70 millimeters; the second impression tray 802 has an tray body 1 having a length 10 of about 65 millimeters; and the third impression tray 803 has an tray body 1 having a length of about 55 millimeters. Additional impression trays may be provided in the dental set, in particular to cater for extra-large or extra-small jaw sizes.

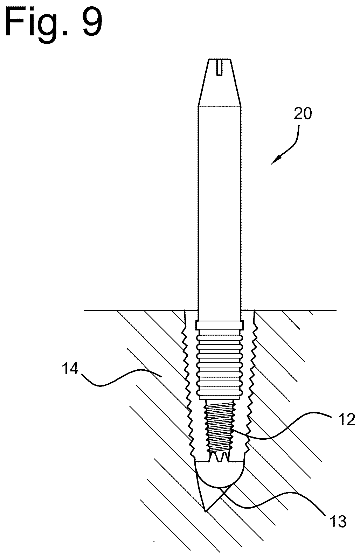

Fig. 9 shows an example of an impression post 20 and an implant body 23. As described hereinabove, a dental set may comprise a plurality of differently sized impression trays. However, more generally a dental set can be formed including a single impression tray. Regardless of the number of impression trays, the dental set can further comprise an impression post 20 and an implant body 23. The implant body can be implanted in a jaw part 24. The implant body 23 may comprise a receiving aperture for insertion of the impression post 20. **In** use, the impression post 20 may be inserted into and fixed to the implant body 23. After that, the tray body 1 of the impression tray 100 may be filled with the free-flowing hardenable impression material. Next, the impression tray 100 may be applied to the jaw part 24 and the teeth and the impression post 23 may be pressed into the free-flowing hardenable impression material in the tray body 1. Thereby, due to its length and rigidity, the impression post 20 may puncture through the penetrable sheet 9. After hardening of the impression material, the impression tray 100 may be removed from the jaw and submitted to a laboratory for further processing.

The examples and embodiments described herein serve to illustrate rather than limit the invention. The person skilled in the art will be able to design alternative embodiments without departing from the spirit and scope of the present disclosure, as defined by the appended claims and their equivalents. Reference signs placed in parentheses in the claims shall not be interpreted to limit the scope of the claims. Items described as separate entities in the claims or the description may be implemented as a single hardware or software item combining the features of the items described.

Certain aspects are defined in the following clauses.
1. An impression tray (100) comprising a concave tray body (1) for taking a negative impression of at least one jaw part in a mouth of a patient, wherein the tray body (1) is fillable with a free-flowing hardenable impression material to produce a mold for a model of the at least one jaw part, wherein the tray body (1) comprises:
   a buccal wing (3) on a buccal side of the tray body (1);
   a lingual wing (4) on a lingual side of the tray body (1) at a distance (12) from the buccal wing (3);
   a plurality of support members (5, 6) extending from an edge (15) of the buccal wing (3) to a corresponding edge (16) of the lingual wing (4);
   a penetrable sheet (9) stretched flat in a space between the buccal wing (3) and the lingual wing (4) and extending along the edge (15) of the buccal wing (3), the edge (16) of the lingual wing (4), and the plurality of support members (5, 6), wherein the penetrable sheet (9) is penetrable by an impression post (20);
   wherein a height (19) of the lingual wing (4) measured from the penetrable sheet (9) is at most half the distance (12) between the buccal wing (3) and the lingual wing (4).
2. The impression tray according to clause 1, wherein the height (19) of the lingual wing (4) tapers towards a posterior end (21) of the impression tray (100).
3. The impression tray according to any preceding clause, wherein a height (17) of the buccal wing (3) measured from the penetrable sheet (9) is at most half the distance (12) between the buccal wing (3) and the lingual wing (4).
4. The impression tray according to any preceding clause, wherein a height (17) of the buccal wing (3) tapers towards a posterior end (21) of the impression tray (100).
5. The impression tray according to clause 2 or 3, wherein the height (19, 17) of the lingual wing (4) or buccal wing (3) tapers over a distance of at least 10 millimeters, preferably about 10 to 15 millimeters, towards the posterior end (21), to a height of at most 4 millimeters measured from the penetrable sheet (9).
6. The impression tray according to any preceding clause, wherein at least one of the buccal wing (3) and the lingual wing (4) comprises at least one slot (7, 8) configured to allow to release excess impression material through the slot (7, 8), wherein the at least one slot (7, 8) is arranged at a distance (18) from the penetrable sheet (9) of at most 6 millimeters.
7. The impression tray according to clause 6, wherein the at least one slot (7, 8) is arranged at a distance (18) from the penetrable sheet (9) that is more than half of the height (17, 19) of the wing (3, 4) comprising the at least one slot (7, 8).
8. The impression tray according to clause 6 or 7, wherein a most posterior slot (7) is 10 to 15 millimeters away from the posterior end (21) of the impression tray (100).
9. The impression tray according to any preceding clause, further comprising a tab (2) extending from the edge (15) of the buccal wing (3) on an anterior side (22) of the tray body (1).
10. The impression tray according to any preceding clause, wherein the penetrable sheet (9) is a membrane, a woven fabric, a non-woven fabric or a film.
11. The impression tray according to any preceding clause, wherein the impression tray (100) is a plastics material injection molded part comprising the penetrable sheet (9) integrally joined thereto and penetrable by an impression post (20).
12. The impression tray according to any preceding clause, wherein the height (19) of the lingual wing (4), measured from the penetrable sheet (9), is at most 11 millimeters.
13. The impression tray according to clause 3, wherein the height (17) of the buccal wing (3), measured from the penetrable sheet (9), is at most 14 millimeters.
14. The impression tray according to any preceding clause, wherein a length of the tray body measured from a posterior end (21) to an anterior end (22) corresponding to an incisal edge is between 40 and 80 millimeters.
15. A dental set comprising at least three impression trays (100) in at least three different sizes, wherein a length (10) of the tray body of the respective impression tray, measured from a posterior end (21) to an anterior end (22) corresponding to an incisal edge, differs between the at least three different impression trays, the dental set comprising:
   a first impression tray (801) with a tray body (1) having a length (10) of about 60 to 80 millimeters;
   a second impression tray (802) with a tray body (1) having a length (10) of about 50 to 70 millimeters; and
   a third impression tray (803) with a tray body (1) having a length of about 40 to 60 millimeters.
16. A dental set comprising the impression tray (100) according to any preceding clause and:
   an impression post (20); and
   at least one implant body (23) that is adapted to be situated in the at least one jaw part (24), said at least one implant body (23) comprising a receiving aperture for insertion of the impression post (20).

## Claims

1. An impression tray (100) comprising a concave tray body (1) for taking a negative impression of at least one jaw part in a mouth of a patient, wherein the tray body (1) is fillable with a free-flowing hardenable impression material to produce a mold for a model of the at least one jaw part, wherein the tray body (1) comprises:
a buccal wing (3) on a buccal side of the tray body (1);
a lingual wing (4) on a lingual side of the tray body (1) at a distance (12) from the buccal wing (3);
a plurality of support members (5, 6) extending from an edge (15) of the buccal wing (3) to a corresponding edge (16) of the lingual wing (4);
a penetrable sheet (9) stretched flat in a space between the buccal wing (3) and the lingual wing (4) and extending along the edge (15) of the buccal wing (3), the edge (16) of the lingual wing (4), and the plurality of support members (5, 6), wherein the penetrable sheet (9) is penetrable by an impression post (20);
wherein a height (19) of the lingual wing (4) measured from the penetrable sheet (9) is at most half the distance (12) between the buccal wing (3) and the lingual wing (4),
wherein at least one of the buccal wing (3) and the lingual wing (4) comprises at least one slot (7, 8) configured to allow to release excess impression material through the slot (7, 8), wherein the at least one slot (7, 8) is arranged at a distance (18) from the penetrable sheet (9) of at most 6 millimeters,
wherein the at least one slot (7, 8) is arranged at a distance (18) from the penetrable sheet (9) that is more than half of the height (17, 19) of the wing (3, 4) comprising the at least one slot (7, 8).

2. The impression tray according to claim 1, wherein the height (19) of the lingual wing (4) tapers towards a posterior end (21) of the impression tray (100).

3. The impression tray according to any preceding claim, wherein a height (17) of the buccal wing (3) measured from the penetrable sheet (9) is at most half the distance (12) between the buccal wing (3) and the lingual wing (4).

4. The impression tray according to claim 3, wherein a height (17) of the buccal wing (3) tapers towards a posterior end (21) of the impression tray (100).

5. The impression tray according to claim 2 or 3, wherein the height (19, 17) of the lingual wing (4) or buccal wing (3) tapers over a distance of at least 10 millimeters, preferably about 10 to 15 millimeters, towards the posterior end (21), to a height of at most 4 millimeters measured from the penetrable sheet (9).

6. The impression tray according to claim 1, wherein a most posterior slot (7) is 10 to 15 millimeters away from the posterior end (21) of the impression tray (100).

7. The impression tray according to any preceding claim, further comprising a tab (2) extending from the edge (15) of the buccal wing (3) on an anterior side (22) of the tray body (1).

8. The impression tray according to any preceding claim, wherein the penetrable sheet (9) is a membrane, a woven fabric, a non-woven fabric or a film.

9. The impression tray according to any preceding claim, wherein the impression tray (100) is a plastics material injection molded part comprising the penetrable sheet (9) integrally joined thereto and penetrable by an impression post (20).

10. The impression tray according to any preceding claim, wherein the height (19) of the lingual wing (4), measured from the penetrable sheet (9), is at most 11 millimeters.

11. The impression tray according to claim 3, wherein the height (17) of the buccal wing (3), measured from the penetrable sheet (9), is at most 14 millimeters.

12. The impression tray according to any preceding claim, wherein a length of the tray body measured from a posterior end (21) to an anterior end (22) corresponding to an incisal edge is between 40 and 80 millimeters.

13. A dental set comprising at least three impression trays (100) according to claim 1 in at least three different sizes, wherein a length (10) of the tray body of the respective impression tray, measured from a posterior end (21) to an anterior end (22) corresponding to an incisal edge, differs between the at least three different impression trays, the dental set comprising:
a first impression tray (801) with a tray body (1) having a length (10) of about 60 to 80 millimeters;
a second impression tray (802) with a tray body (1) having a length (10) of about 50 to 70 millimeters; and
a third impression tray (803) with a tray body (1) having a length of about 40 to 60 millimeters.

14. A dental set comprising the impression tray (100) according to any preceding claim and:
an impression post (20); and
at least one implant body (23) that is adapted to be situated in the at least one jaw part (24), said at least one implant body (23) comprising a receiving aperture for insertion of the impression post (20).
